(19) **Europäisches Patentamt / European Patent Office / Office européen des brevets**

(11) **EP 4 693 511 A1**

(12) **EUROPEAN PATENT APPLICATION**
published in accordance with Art. 153(4) EPC

(43) Date of publication:
**11.02.2026 Bulletin 2026/07**

(21) Application number: **24780330.7**

(22) Date of filing: **26.03.2024**

(51) International Patent Classification (IPC):
**H01M 4/62** $^{(2006.01)}$      **H01M 4/13** $^{(2010.01)}$
**H01M 4/139** $^{(2010.01)}$

(52) Cooperative Patent Classification (CPC):
**H01M 4/13; H01M 4/139; H01M 4/62;** Y02E 60/10

(86) International application number:
**PCT/JP2024/011987**

(87) International publication number:
**WO 2024/204220 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 JP 2023059506**

(71) Applicant: **Zeon Corporation**
**Tokyo 100-8246 (JP)**

(72) Inventors:
• **KITAZAWA, Yuzo**
 **Tokyo 100-8246 (JP)**
• **SHIMODE, Mana**
 **Tokyo 100-8246 (JP)**

(74) Representative: **Maiwald GmbH**
**Elisenhof**
**Elisenstraße 3**
**80335 München (DE)**

(54) **BINDER COMPOSITION FOR NON-AQUEOUS SECONDARY BATTERY ELECTRODE, SLURRY COMPOSITION FOR NON-AQUEOUS SECONDARY BATTERY ELECTRODE, ELECTRODE FOR NON-AQUEOUS SECONDARY BATTERY, AND NON-AQUEOUS SECONDARY BATTERY**

(57) Provided is a binder composition for a non-aqueous secondary battery electrode that can suitably be used to produce an electrode having excellent flexibility and that can enhance battery characteristics of a secondary battery including the obtained electrode. The binder composition for a non-aqueous secondary battery electrode contains a polymer A and yields a film X having a breaking stress [MPa] and a breaking strain [-] according to tensile testing that satisfy the following relationship formula: $0.010 \leq$ breaking stress [MPa]/breaking strain [-] $\leq 1.000$.

**EP 4 693 511 A1**

**Description**

TECHNICAL FIELD

The present disclosure relates to a binder composition for a non-aqueous secondary battery electrode, a slurry composition for a non-aqueous secondary battery electrode, an electrode for a non-aqueous secondary battery, and a non-aqueous secondary battery.

BACKGROUND

Non-aqueous secondary batteries (hereinafter, also referred to simply as "secondary batteries"), such as lithium ion secondary batteries, have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher non-aqueous secondary battery performance.

An electrode used in a secondary battery such as a lithium ion secondary battery normally includes a current collector and an electrode mixed material layer (positive electrode mixed material layer or negative electrode mixed material layer) formed on the current collector. This electrode mixed material layer is formed by, for example, applying a slurry composition containing an electrode active material, a binder-containing binder composition, and so forth onto the current collector, and then drying the applied slurry composition.

In recent years, attempts have been made to improve electrode mixed material layers in order to achieve further improvement of secondary battery performance.

As one example, Patent Literature (PTL) 1 discloses that in a positive electrode active material layer (electrode mixed material layer) containing a positive electrode active material, a conductive material, and a binder (binding material), a binder including a first polymer that is a specific fluorine-containing polymer and a second polymer that includes a polymerization unit including a nitrile group, a polymerization unit including a hydrophilic group, a (meth)acrylic acid ester polymerization unit, and a linear alkylene polymerization unit having a carbon number of 4 or more in specific proportions is used as the aforementioned binder.

CITATION LIST

Patent Literature

PTL 1: JP2017-143075A

SUMMARY

(Technical Problem)

In recent years, the thickening of electrodes has been investigated with the aim of improving energy density of secondary batteries. However, increasing the thickness of an electrode leads to reduction of flexibility of the electrode, and particularly in the case of a wound secondary battery, there have been instances in which cracking of an electrode has occurred during winding up of the electrode at an innermost wind. Moreover, increasing the amount of a binder that is compounded in order to increase the flexibility of an electrode has resulted in deterioration of battery characteristics of a secondary battery such as IV characteristics, cycle characteristics, and rate characteristics.

Accordingly, one object of the present disclosure is to provide a binder composition for a non-aqueous secondary battery electrode that can suitably be used to produce an electrode having excellent flexibility and that can enhance battery characteristics of a secondary battery including the obtained electrode.

Another object of the present disclosure is to provide a slurry composition for a non-aqueous secondary battery electrode that is capable of forming an electrode having excellent flexibility and that can enhance battery characteristics of a secondary battery including the obtained electrode.

Yet another object of the present disclosure is to provide an electrode for a non-aqueous secondary battery that can improve battery characteristics of a non-aqueous secondary battery and a non-aqueous secondary battery that has excellent battery characteristics.

(Solution to Problem)

The inventors conducted diligent investigation with the aim of solving the problems described above. The inventors made a new discovery that by using a binder composition for a non-aqueous secondary battery electrode containing a specific polymer that yields a film having a breaking stress [MPa] and a breaking strain [-] according to tensile testing that satisfy a specific relationship, it is possible to produce an electrode having excellent flexibility and to enhance battery characteristics of a secondary battery. In this manner, the inventors completed the present disclosure.

Specifically, with the aim of advantageously solving the problem set forth above, [1] a presently disclosed binder composition for a non-aqueous secondary battery electrode comprises a polymer A, wherein the binder composition for a non-aqueous secondary battery electrode yields a film X having a breaking stress [MPa] and a breaking strain [-] according to tensile testing that satisfy a relationship formula: 0.010 ≤ breaking stress [MPa]/breaking strain [-] ≤ 1.000. When breaking stress and breaking strain in a situation in which the binder composition for a non-aqueous secondary battery electrode is used to form a film and is subjected to tensile testing have values satisfying the specific relationship formula set forth above in this manner, flexibility of an electrode formed using the binder composition for a non-aqueous secondary battery electrode can be improved, and battery characteristics of a secondary battery in which this electrode is used can be improved.

Note that the breaking stress and breaking strain in tensile testing of a film X of a binder composition for a non-aqueous secondary battery electrode referred to in the present disclosure can be measured by a method described in the EXAMPLES section.

[2] In the binder composition for a non-aqueous secondary battery electrode according to the foregoing [1], the breaking strain upon tensile testing of the film X is preferably 6.0 or more. When the breaking strain of the film X of the binder composition for a non-aqueous secondary battery electrode according to tensile testing is not less than the lower limit set forth above in this manner, flexibility of an obtained electrode can be even further improved.

[3] In the binder composition for a non-aqueous secondary battery electrode according to the foregoing [1] or [2], the polymer A preferably includes two or more types of polymers. When the polymer A includes two or more types of polymers in this manner, flexibility of an obtained electrode can be even further improved, and battery characteristics of a secondary battery in which this electrode is used can be even further improved.

[4] In the binder composition for a non-aqueous secondary battery electrode according to any one of the foregoing [1] to [3], the polymer A preferably includes a polymer A1 that yields a film Y having a breaking stress of 0.3 MPa or more and a breaking strain of not less than 6.0 and less than 25.0 according to tensile testing. When the polymer A includes a polymer A1 that yields a film having a breaking stress and a breaking strain that are within the specific ranges set forth above in this manner, an electrode mixed material layer can be maintained, and cycle characteristics of a secondary battery in which this electrode is used can be even further improved.

Note that the breaking stress and breaking strain upon tensile testing of a film Y of a polymer referred to in the present disclosure can be measured by a method described in the EXAMPLES section.

[5] In the binder composition for a non-aqueous secondary battery electrode according to the foregoing [4], the polymer A preferably further includes a polymer A2 that yields a film Y having a breaking stress of 0.3 MPa or more and a breaking strain of 25.0 or more according to tensile testing. When the polymer A further includes a polymer A2 that yields a film having a breaking stress and a breaking strain that are within the specific ranges set forth above in this manner, flexibility of an obtained electrode can be even further improved, and IV characteristics of even a wound secondary battery in which this electrode is used can be maintained.

[6] In the binder composition for a non-aqueous secondary battery electrode according to the foregoing [5], a mass ratio of the polymer A1 and the polymer A2, expressed as polymer A1:polymer A2, is preferably not less than 9:1 and not more than 1:9. When the mass ratio of the polymer A1 and the polymer A2 is within the specific range set forth above in this manner, flexibility of an obtained electrode can be even further improved, and battery characteristics of a secondary battery in which this electrode is used can be even further improved.

[7] In the binder composition for a non-aqueous secondary battery electrode according to any one of the foregoing [4] to [6], the polymer A1 preferably includes a nitrile group-containing monomer unit and an alkylene structural unit. When the polymer A1 includes a nitrile group-containing monomer unit and an alkylene structural unit in this manner, flexibility of an obtained electrode can be even further improved, and IV characteristics of a wound secondary battery in which this electrode is used can be even further improved.

Note that a "monomer unit" of a polymer referred to in the present disclosure means "a repeating unit derived from the monomer that is included in a polymer obtained using that monomer". Moreover, the inclusion or absence of a specific structural unit or monomer unit in a polymer can be judged using a nuclear magnetic resonance (NMR) method such as $^1$H-NMR.

[8] In the binder composition for a non-aqueous secondary battery electrode according to any one of the foregoing [5] to [7], the polymer A2 preferably includes a (meth)acrylic acid ester monomer unit. When the polymer A2 includes a (meth)acrylic acid ester monomer unit in this manner, flexibility of an electrode can be even further improved, and battery characteristics of a secondary battery in which this electrode is used can be even further improved.

Note that in the present disclosure, "(meth)acryl" is used to indicate "acryl" and/or "methacryl".

Moreover, with the aim of advantageously solving the problem set forth above, [9] a presently disclosed slurry composition for a non-aqueous secondary battery electrode comprises: an electrode active material; and the binder composition for a non-aqueous secondary battery electrode according to any one of the foregoing [1] to [8]. By compounding the binder composition for a non-aqueous secondary battery electrode set forth above and an electrode active material in this manner, it is easy to obtain a slurry composition for a non-aqueous secondary battery electrode that is capable of producing an electrode having excellent flexibility and that can enhance battery characteristics of a secondary battery including the obtained electrode.

Furthermore, with the aim of advantageously solving the problem set forth above, [10] a presently disclosed electrode for a non-aqueous secondary battery comprises an electrode mixed material layer formed using the slurry composition for a non-aqueous secondary battery electrode according to the foregoing [9]. By using the slurry composition for a non-aqueous secondary battery electrode set forth above in this manner, an electrode for a non-aqueous secondary battery having excellent flexibility can be produced well, and battery characteristics of a secondary battery in which this electrode for a non-aqueous secondary battery is used can be improved.

Also, with the aim of advantageously solving the problem set forth above, [11] a presently disclosed non-aqueous secondary battery comprises the electrode for a non-aqueous secondary battery according to the foregoing [10]. By using the electrode for a non-aqueous secondary battery set forth above in this manner, it is possible to improve battery characteristics of a secondary battery.

(Advantageous Effect)

According to the present disclosure, it is possible to provide a binder composition for a non-aqueous secondary battery electrode that can suitably be used to produce an electrode having excellent flexibility and that can enhance battery characteristics of a secondary battery including the obtained electrode.

Moreover, according to the present disclosure, it is possible to provide a slurry composition for a non-aqueous secondary battery electrode that is capable of forming an electrode having excellent flexibility and that can enhance battery characteristics of a secondary battery including the obtained electrode.

Furthermore, according to the present disclosure, it is possible to provide an electrode for a non-aqueous secondary battery that can improve battery characteristics of a non-aqueous secondary battery and a non-aqueous secondary battery that has excellent battery characteristics.

DETAILED DESCRIPTION

The following provides a detailed description of embodiments of the present disclosure.

The presently disclosed binder composition for a non-aqueous secondary battery electrode (hereinafter, also referred to simply as a "binder composition") can suitably be used in production of the presently disclosed slurry composition for a non-aqueous secondary battery electrode (hereinafter, also referred to simply as a "slurry composition"), for example. Moreover, the presently disclosed slurry composition for a non-aqueous secondary battery electrode can suitably be used in production of the presently disclosed electrode for a non-aqueous secondary battery, for example. Furthermore, a feature of the presently disclosed non-aqueous secondary battery is that an electrode for a non-aqueous secondary battery formed using the presently disclosed slurry composition for a non-aqueous secondary battery electrode is used therein.

Note that the presently disclosed binder composition for a non-aqueous secondary battery electrode and slurry composition for a non-aqueous secondary battery electrode can particularly suitably be used in formation of a positive electrode of a non-aqueous secondary battery.

(Binder composition for non-aqueous secondary battery electrode)

The presently disclosed binder composition contains a polymer A and may optionally further contain one or more selected from a solvent and other components.

A feature of the presently disclosed binder composition is that the presently disclosed binder composition yields a film X having a breaking stress [MPa] and a breaking strain [-] according to tensile testing that satisfy a relationship formula: $0.010 \leq$ breaking stress [MPa]/breaking strain [-] $\leq 1.000$. Consequently, when a slurry composition that has been produced using the binder composition is used to form an electrode mixed material layer on a current collector and thereby produce an electrode, it is possible to impart a certain strength for functioning as an electrode while also imparting sufficient flexibility to the electrode. As a result, the occurrence of cracking during winding or the like of the electrode can be inhibited, and battery characteristics of a secondary battery including this electrode can be improved.

<Polymer A>

The polymer A is a component that in an electrode produced by forming an electrode mixed material layer on a current collector using a slurry composition that has been produced using the binder composition, has a function of imparting flexibility to the electrode while also holding components such as an electrode active material that are contained in the electrode mixed material layer so that these components are not shed from the electrode mixed material layer.

<<Chemical composition>>

A polymer having any chemical composition can be used as a constituent polymer of the polymer A without any specific limitations so long as it can display the function described above. Note that one type of polymer may constitute the polymer A, or two or more types of polymers may constitute the polymer A. Also note that in a case in which the polymer A is composed of two or more types of polymers, the proportional content of a structural unit and/or monomer unit in the polymer A referred to in the following description is the total proportional content of the structural unit and/or monomer unit in all polymers constituting the polymer A.

Examples of polymers that can suitably be used as the polymer A include a polymer that includes at least one structural unit and/or monomer unit selected from the group consisting of a nitrile group-containing monomer unit, an alkylene structural unit, a (meth)acrylic acid ester monomer unit, a hydrophilic group-containing monomer unit, and an aromatic vinyl monomer unit. In particular, from a viewpoint of even further improving flexibility of an obtained electrode and even further improving battery characteristics of a secondary battery, a polymer that includes at least a nitrile group-containing monomer unit and an alkylene structural unit is preferable as the polymer A, a polymer that includes a nitrile group-containing monomer unit, an alkylene structural unit, and at least one monomer unit selected from the group consisting of a (meth)acrylic acid ester monomer unit, a hydrophilic group-containing monomer unit, and an aromatic vinyl monomer unit is more preferable as the polymer A, and a polymer that includes each of a nitrile group-containing monomer unit, an alkylene structural unit, and a (meth)acrylic acid ester monomer unit is even more preferable as the polymer A. Note that it is preferable that the polymer A does not include a fluorine-containing monomer unit.

[Nitrile group-containing monomer unit]

A nitrile group-containing monomer unit is a repeating unit that is derived from a nitrile group-containing monomer. Examples of nitrile group-containing monomers that can form a nitrile group-containing monomer unit include $\alpha,\beta$-ethylenically unsaturated nitrile monomers. Any $\alpha,\beta$-ethylenically unsaturated compound that includes a nitrile group may be used as an $\alpha,\beta$-ethylenically unsaturated nitrile monomer without any specific limitations, and examples thereof include acrylonitrile; $\alpha$-halogenoacrylonitriles such as $\alpha$-chloroacrylonitrile and $\alpha$-bromoacrylonitrile; and $\alpha$-alkylacrylonitriles such as methacrylonitrile and $\alpha$-ethylacrylonitrile. Of these examples, acrylonitrile and methacrylonitrile are preferable, and acrylonitrile is more preferable as a nitrile group-containing monomer.

One of these nitrile group-containing monomers can be used individually, or two or more of these nitrile group-containing monomers can be used in combination.

The proportional content of nitrile group-containing monomer units in the polymer A when all repeating units (total of structural units and monomer units) in the polymer A are taken to be 100 mass% is preferably 5 mass% or more, and more preferably 10 mass% or more, and is preferably 40 mass% or less, and more preferably 30 mass% or less. In a situation in which the proportional content of nitrile group-containing monomer units in the polymer A exceeds any of the upper limits set forth above, reduction of flexibility and deterioration of IV characteristics due to formation of a coating film on a conductive material are concerns. In a situation in which the proportional content of nitrile group-containing monomer units in the polymer A is less than any of the lower limits set forth above, deterioration of solubility of the polymer A during slurry composition production and deterioration of electrode formability are concerns. When the proportional content of nitrile group-containing monomer units is within any of the specific ranges set forth above, flexibility of an obtained electrode can be even further improved, and production process suitability and battery characteristics of a secondary battery can be even further improved.

[Alkylene structural unit]

An alkylene structural unit is a repeating unit that is composed of only an alkylene structure represented by a general formula: $-C_nH_{2n}-$ [n is an integer of 2 or more]. Through inclusion of an alkylene structural unit in the polymer A, flexibility of an obtained electrode can be even further improved, and battery characteristics of a secondary battery can be even further improved.

Although the alkylene structural unit may be linear or branched, the alkylene structural unit is preferably linear (i.e., is preferably a linear alkylene structural unit) from a viewpoint of even further improving flexibility of an obtained electrode. Moreover, the carbon number of the alkylene structural unit is preferably 4 or more (i.e., n in the preceding general formula $-C_nH_{2n}-$ is preferably an integer of 4 or more).

Examples of methods by which an alkylene structural unit can be introduced into the polymer A include the following methods (1) and (2), but are not specifically limited thereto.

(1) A method in which a polymer is produced from a monomer composition containing a conjugated diene monomer and then the polymer is hydrogenated so as to convert a conjugated diene monomer unit to an alkylene structural unit
(2) A method in which a polymer is produced from a monomer composition containing a 1-olefin monomer
Of these methods, method (1) is preferable in terms of ease of production of the polymer.

In other words, the alkylene structural unit is preferably a structural unit obtained through hydrogenation of a conjugated diene monomer unit (i.e., a hydrogenated conjugated diene unit), more preferably a structural unit obtained through hydrogenation of an isoprene unit (i.e., a hydrogenated isoprene unit) or a structural unit obtained through hydrogenation of a 1,3-butadiene unit (i.e., a hydrogenated 1,3-butadiene unit), and even more preferably a structural unit obtained through hydrogenation of a 1,3-butadiene unit (i.e., a hydrogenated 1,3-butadiene unit). The hydrogenation can be performed by a commonly known method such as described further below.

Moreover, the 1-olefin monomer may be 1-butene, 1-hexene, or the like, for example.

One of these conjugated diene monomers or 1-olefin monomers may be used individually, or two or more of these conjugated diene monomers or 1-olefin monomers may be used in combination.

The conjugated diene monomer that can be used in method (1) described above may be a conjugated diene compound such as 1,3-butadiene, isoprene, 2,3-dimethyl-1,3-butadiene, or 1,3-pentadiene, for example. Of these conjugated diene monomers, isoprene and 1,3-butadiene are preferable, and 1,3-butadiene is more preferable.

Note that in a case in which an alkylene structural unit has been introduced into the polymer A through method (1) described above, a conjugated diene monomer unit can remain in the polymer A in a situation in which conjugated diene monomer units have not been completely hydrogenated. In other words, the polymer A may optionally include a conjugated diene monomer unit as a repeating unit.

The total proportional content of alkylene structural units and conjugated diene monomer units in the polymer A when all repeating units (total of structural units and monomer units) in the polymer A are taken to be 100 mass% is preferably 20 mass% or more, more preferably 25 mass% or more, and even more preferably 30 mass% or more, and is preferably 70 mass% or less, more preferably 65 mass% or less, and even more preferably 60 mass% or less. In a situation in which the total proportional content of alkylene structural units and conjugated diene monomer units in the polymer A exceeds any of the upper limits set forth above, deterioration of solubility of the polymer A during slurry composition production and deterioration of electrode formability are concerns. In a situation in which the total proportional content of alkylene structural units and conjugated diene monomer units in the polymer A is less than any of the lower limits set forth above, difficulty of creating carbon electrical conduction paths and deterioration of IV characteristics are concerns. Deterioration of flexibility of an electrode is also a concern. When the total proportional content of alkylene structural units and conjugated diene monomer units is within any of the specific ranges set forth above, flexibility of an obtained electrode can be even further improved, and battery characteristics of a secondary battery can be even further improved.

Note that in a case in which the polymer A does not include a conjugated diene monomer unit, such as a case in which conjugated diene monomer units have been completely hydrogenated in method (1) described above or a case in which the polymer A has been produced by method (2) described above, for example, the proportional content of alkylene structural units in the polymer A when all repeating units (total of structural units and monomer units) in the polymer A are taken to be 100 mass% is preferably 20 mass% or more, more preferably 25 mass% or more, and even more preferably 30 mass% or more, and is preferably 70 mass% or less, more preferably 65 mass% or less, and even more preferably 60 mass% or less. In a situation in which the proportional content of alkylene structural units in the polymer A exceeds any of the upper limits set forth above, deterioration of solubility of the polymer A during slurry composition production and deterioration of electrode formability are concerns. Moreover, in a situation in which the proportional content of alkylene structural units in the polymer A is less than any of the lower limits set forth above, difficulty of creating carbon electrical conduction paths and deterioration of IV characteristics are concerns. Deterioration of flexibility of an electrode is also a concern. When the proportional content of alkylene structural units is within any of the specific ranges set forth above, flexibility of an obtained electrode can be even further improved, and battery characteristics of a secondary battery can be even further improved.

-(Meth)acrylic acid ester monomer unit-

A (meth)acrylic acid ester monomer unit is a repeating unit that is derived from a (meth)acrylic acid ester monomer.

Examples of (meth)acrylic acid ester monomers include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, stearyl acrylate, and cyclohexyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, stearyl methacrylate, and cyclohexyl methacrylate. Of these (meth)acrylic acid ester monomers, n-butyl acrylate or ethyl acrylate is preferable, and ethyl acrylate is more preferable.

The proportional content of (meth)acrylic acid ester monomer units in the polymer A when all repeating units (total of structural units and monomer units) in the polymer A are taken to be 100 mass% is preferably 20 mass% or more, and more preferably 30 mass% or more, and is preferably 60 mass% or less, more preferably 50 mass% or less, and even more preferably 40 mass% or less. In a situation in which the proportional content of (meth)acrylic acid ester monomer units in the polymer A exceeds any of the upper limits set forth above, increased degree of swelling in electrolyte solution and deterioration of IV characteristics are concerns. In a situation in which the proportional content of (meth)acrylic acid ester monomer units in the polymer A is less than any of the lower limits set forth above, deterioration of flexibility of an electrode is a concern. When the proportional content of (meth)acrylic acid ester monomer units is within any of the specific ranges set forth above, flexibility of an obtained electrode can be even further improved, and battery characteristics of a secondary battery can be even further improved.

[Hydrophilic group-containing monomer unit]

A hydrophilic group-containing monomer unit is a repeating unit that is derived from a hydrophilic group-containing monomer.

Examples of hydrophilic group-containing monomers that can form a hydrophilic group-containing monomer unit include carboxy group-containing monomers, sulfo group-containing monomers, phosphate group-containing monomers, and hydroxy group-containing monomers.

Examples of carboxy group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid esters such as methyl allyl maleate, diphenyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Furthermore, an acid anhydride that produces a carboxy group upon hydrolysis can also be used as a carboxy group-containing monomer.

Other examples include monoesters and diesters of α,β-ethylenically unsaturated polybasic carboxylic acids such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate.

Examples of sulfo group-containing monomers include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

In the present disclosure, "(meth)allyl" is used to indicate "allyl" and/or "methallyl".

Examples of phosphate group-containing monomers include 2-(meth)acryloyloxyethyl phosphate, methyl-2-(meth)acryloyloxyethyl phosphate, ethyl-(meth)acryloyloxyethyl phosphate, vinylphosphonic acid, and dimethyl vinylphosphonate.

In the present disclosure, "(meth)acryloyl" is used to indicate "acryloyl" and/or "methacryloyl".

Examples of hydroxy group-containing monomers include ethylenically unsaturated alcohols such as (meth)allyl alcohol, 3-buten-1-ol, and 5-hexen-1-ol; alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula: $CH_2=CR_1\text{-}COO\text{-}(C_nH_{2n}O)_m\text{-}H$ (where m represents an integer of 2 to 9, n represents an integer of 2 to 4, and $R_1$ represents hydrogen or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth) allyl ether and dipropylene glycol mono(meth)allyl ether; mono(meth)allyl ethers of halogen or hydroxy substituted (poly) alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether.

The proportional content of hydrophilic group-containing monomer units in the polymer A when all repeating units (total of structural units and monomer units) in the polymer A are taken to be 100 mass% is preferably 0.1 mass% or more, and more preferably 0.5 mass% or more, and is preferably 5 mass% or less, and more preferably 3 mass% or less. When the proportional content of hydrophilic group-containing monomer units in the polymer A is within any of the ranges set forth above, producibility of the polymer A can be increased, and rate characteristics of a secondary battery can be improved due to coating of an active material being inhibited.

-Aromatic vinyl monomer unit-

An aromatic vinyl monomer unit is a repeating unit that is derived from an aromatic vinyl monomer. Examples of aromatic vinyl monomers that can form an aromatic vinyl monomer unit include styrene, $\alpha$-methylstyrene, vinyltoluene, and divinylbenzene. One of these aromatic vinyl monomers can be used individually, or two or more of these aromatic vinyl monomers can be used in combination.

The proportional content of aromatic vinyl monomer units in the polymer A when all repeating units (total of structural units and monomer units) in the polymer A are taken to be 100 mass% is preferably 1 mass% or more, and more preferably 3 mass% or more, and is preferably 30 mass% or less, and more preferably 20 mass% or less. When the proportional content is within any of the ranges set forth above, electrochemical stability of the polymer A can be increased, and rate characteristics of a secondary battery can be improved due to coating of a conductive material being inhibited.

<<Properties>>

[Breaking stress]

The breaking stress according to tensile testing (hereinafter, also referred to simply as the "breaking stress") of a film Y formed using the polymer A is preferably 0.3 MPa or more, preferably 0.5 MPa or more, and even more preferably 1.0 MPa or more, and is preferably 20 MPa or less, more preferably 15 MPa or less, and even more preferably 10 MPa or less. In a situation in which the breaking stress exceeds any of the upper limits set forth above, strong rigidity and reduction of flexibility of an electrode are concerns. Moreover, in a situation in which the breaking stress is less than any of the lower limits set forth above, difficulty of maintaining an electrode mixed material layer and deterioration of cycle characteristics of a secondary battery are concerns. When the breaking stress is within any of the ranges set forth above, it is possible to achieve a good balance of strength and flexibility of an obtained electrode while also even further improving battery characteristics of a secondary battery.

The breaking stress of the polymer A can be controlled by altering the chemical composition, molecular weight, macromolecular chain branching, or monomer sequence of the polymer A, for example.

[Breaking strain]

The breaking strain according to tensile testing (hereinafter, also referred to simply as the "breaking strain") of a film Y formed using the polymer A is preferably 6.0 or more, preferably 8.0 or more, and even more preferably 10.0 or more, and is preferably 80 or less, more preferably 70 or less, and even more preferably 60 or less. In a situation in which the breaking strain exceeds any of the upper limits set forth above, difficulty of maintaining an electrode mixed material layer and deterioration of cycle characteristics of a secondary battery are concerns. In a situation in which the breaking strain is less than any of the lower limits set forth above, deterioration of flexibility of an electrode is a concern. When the breaking strain is within any of the ranges set forth above, it is possible to achieve a good balance of strength and flexibility of an obtained electrode while also even further improving battery characteristics of a secondary battery.

The breaking strain of the polymer A can be controlled by altering the chemical composition, molecular weight distribution, or entanglement density of the polymer A, for example.

[Iodine value]

The iodine value of the polymer A is preferably 5 mg/100 mg or more, and more preferably 10 mg/100 mg or more, and is preferably 30 mg/100 mg or less, more preferably 25 mg/100 mg or less, and even more preferably 20 mg/100 mg or less. When the iodine value is within any of the ranges set forth above, electrochemical stability of the polymer A improves, and cycle characteristics of a secondary battery can be improved.

Note that the iodine value of the polymer A can be measured by a method described in the EXAMPLES section. The iodine value of the polymer A can be controlled based on the amount of hydrogenation catalyst and/or the hydrogenation conditions (pressure and time) adopted in hydrogenation of a polymer during production of the polymer A, for example.

<<Combination of types of polymer A>>

From a viewpoint of even further improving flexibility of an obtained electrode and even further improving battery characteristics of a secondary battery, it is preferable that the polymer A includes two or more types of polymers. Specifically, it is preferable that the polymer A includes two or more types of polymers that differ from each other in terms of at least one selected from the group consisting of chemical composition, breaking stress, breaking strain, iodine value, molecular weight, and glass-transition temperature. In particular, it is preferable that the polymer A includes two types of polymers A1 and A2 that differ from each other in terms of at least one selected from the group consisting of chemical composition, breaking stress, breaking strain, iodine value, molecular weight, and glass-transition temperature, more preferable that the polymer A includes two types of polymers A1 and A2 that differ from each other in terms of chemical composition and/or breaking strain, even more preferable that the polymer A is composed of two types of polymers A1 and A2 that differ from each other in terms of at least one selected from the group consisting of chemical composition, breaking stress, breaking strain, iodine value, molecular weight, and glass-transition temperature, and particularly preferable that the polymer A is composed of two types of polymers A1 and A2 that differ from each other in terms of chemical composition and/or breaking strain.

As a combination of polymers A1 and A2 that differ from each other in terms of chemical composition, a combination of a polymer including a nitrile group-containing monomer unit and an alkylene structural unit as the polymer A1 and a polymer including at least one structural unit and/or monomer unit selected from the group consisting of a nitrile group-containing monomer unit, an alkylene structural unit, a (meth)acrylic acid ester monomer unit, a hydrophilic group-containing monomer unit, and an aromatic vinyl monomer unit as the polymer A2 is preferable, and a combination of a polymer including a nitrile group-containing monomer unit and an alkylene structural unit as the polymer A1 and a polymer including a (meth)acrylic acid ester monomer unit as the polymer A2 is more preferable, for example.

Specifically, the polymer A1 is preferably a polymer including a nitrile group-containing monomer unit and an alkylene structural unit, and more preferably a polymer composed of a nitrile group-containing monomer unit and an alkylene structural unit.

The proportional content of nitrile group-containing monomer units in the polymer A1 when all repeating units (total of structural units and monomer units) in the polymer A1 are taken to be 100 mass% is preferably 20 mass% or more, and more preferably 25 mass% or more, and is preferably 50 mass% or less, and more preferably 40 mass% or less.

The proportional content of alkylene structural units in the polymer A1 when all repeating units (total of structural units and monomer units) in the polymer A1 are taken to be 100 mass% is preferably 50 mass% or more, and even more preferably 60 mass% or more, and is preferably 80 mass% or less, and more preferably 75 mass% or less.

Moreover, the total proportional content of alkylene structural units and conjugated diene monomer units in the polymer A1 when all repeating units (total of structural units and monomer units) in the polymer A1 are taken to be 100 mass% is preferably 50 mass% or more, and even more preferably 60 mass% or more, and is preferably 80 mass% or less, and more preferably 75 mass% or less.

The breaking strain of a film Y formed using the polymer A1 is preferably 6.0 or more, and more preferably 10.0 or more, and is preferably less than 25.0, and more preferably 20.0 or less.

Moreover, the breaking stress of a film Y formed using the polymer A1 is preferably 0.3 MPa or more, and more preferably 0.5 MPa or more, and is preferably 3.0 MPa or less, and more preferably 2.0 MPa or less.

The polymer A2 is preferably a polymer including at least one structural unit and/or monomer unit selected from the group consisting of a nitrile group-containing monomer unit, an alkylene structural unit, a (meth)acrylic acid ester monomer unit, a hydrophilic group-containing monomer unit, and an aromatic vinyl monomer unit, and is more preferably a polymer including a (meth)acrylic acid ester monomer unit.

The proportional content of nitrile group-containing monomer units in the polymer A2 when all repeating units (total of structural units and monomer units) in the polymer A2 are taken to be 100 mass% is preferably 10 mass% or more, and more preferably 15 mass% or more, and is preferably 30 mass% or less, and more preferably 25 mass% or less.

The proportional content of alkylene structural units in the polymer A2 when all repeating units (total of structural units and monomer units) in the polymer A2 are taken to be 100 mass% is preferably 20 mass% or more, and even more preferably 30 mass% or more, and is preferably 60 mass% or less, and more preferably 50 mass% or less.

The total proportional content of alkylene structural units and conjugated diene monomer units in the polymer A2 when all repeating units (total of structural units and monomer units) in the polymer A2 are taken to be 100 mass% is preferably 20 mass% or more, and even more preferably 30 mass% or more, and is preferably 60 mass% or less, and more preferably 50 mass% or less.

The proportional content of (meth)acrylic acid ester monomer units in the polymer A2 when all repeating units (total of structural units and monomer units) in the polymer A2 are taken to be 100 mass% is preferably 20 mass% or more, and more preferably 30 mass% or more, and is preferably 60 mass% or less, and more preferably 50 mass% or less.

The breaking strain of a film Y formed using the polymer A2 is preferably 20.0 or more, and more preferably 25 or more, and is preferably 80 or less, and more preferably 75 or less.

Moreover, the breaking stress of a film Y formed using the polymer A2 is preferably 0.3 MPa or more, and more preferably 0.5 MPa or more, and is preferably 3.0 MPa or less, and more preferably 2.0 MPa or less.

From a viewpoint of even further improving flexibility of an obtained electrode and even further improving battery characteristics of a secondary battery, a mass ratio of the polymer A1 and the polymer A2 (polymer A1:polymer A2) is preferably not less than 9:1 and not more than 1:9, and more preferably not less than 2:8 and not more than 8:2.

For example, a mass ratio of a polymer A1 that has a breaking strain of not less than 6.0 and less than 25.0 and a polymer A2 that has a breaking strain of 25.0 or more (polymer A1:polymer A2) is preferably not less than 9:1 and not more than 1:9, and more preferably not less than 2:8 and not more than 8:2.

Note that in a case in which the polymer A includes a polymer other than the polymers A1 and A2, it is generally preferable that the content of the polymer other than the polymers A1 and A2 in the polymer A is 15 mass% or less. No specific limitations are placed on the polymer other than the polymers A1 and A2 so long as the expression of desired effects according to the present disclosure is not impaired.

<<Production method of polymer A>>

No specific limitations are placed on the method by which the polymer A described above is produced. For example, a method such as solution polymerization, suspension polymerization, bulk polymerization, or emulsion polymerization can be adopted.

Moreover, the polymerization method may be addition polymerization such as ionic polymerization, radical polymerization, or living radical polymerization. Furthermore, a known polymerization initiator may be used as a polymerization initiator.

It is preferable that a molecular weight modifier including a sulfur-containing group such as a mercapto group is used in the polymerization. Examples of mercapto group-containing compounds that may be used as the molecular weight modifier include mercapto group-containing compounds having a carbon number of 8 to 12 such as octyl mercaptan, 2,2,4,6,6-pentamethyl-4-heptanethiol, 2,4,4,6,6-pentamethyl-2-heptanethiol, 2,3,4,6,6-pentamethyl-2-heptanethiol, 2,3,4,6,6-pentamethyl-3-heptanethiol, t-dodecyl mercaptan, and n-dodecyl mercaptan; and mercapto group-containing compounds such as 2,2,4,6,6-pentamethyl-4-octanethiol, 2,2,4,6,6,8,8-heptamethyl-4-nonanethiol, bis(2-mercaptoethyl) sulfide, methyl 3-mercaptopropionate, and 1-butanethiol. Of these examples, mercapto group-containing compounds having a carbon number of 8 to 12 are preferable, and t-dodecyl mercaptan is more preferable.

The amount of the mercapto group-containing compound that is compounded as a molecular weight modifier can be adjusted as appropriate.

Note that in a case in which the above-described polymer is produced by method (1), radical polymerization using a redox polymerization initiator that includes an iron-based compound is preferably adopted as the polymerization method of the polymer that is to be hydrogenated. The redox polymerization initiator can be a combination of cumene hydroperoxide, ethylenediaminetetraacetic acid iron monosodium salt, sodium hydroxymethanesulfinate, and ethylenediaminetetraacetic acid tetrasodium salt (EDTA·4Na), or the like, for example, but is not specifically limited thereto.

In a case in which the above-described polymer A is produced by method (1), a coagulant may be added to a water dispersion of a pre-hydrogenation polymer (i.e., a precursor of the polymer A) that is obtained after emulsion polymerization to cause coagulation, the pre-hydrogenation polymer may be collected, and then the collected pre-hydrogenation polymer may be subjected to hydrogenation (after optionally performing a "metathesis reaction" described further below).

The hydrogenation can be performed using a known hydrogenation method such as an oil-layer hydrogenation method or a water-layer hydrogenation method. The catalyst used in the hydrogenation may be any selective hydrogenation catalyst that is commonly known such as a palladium-based catalyst or a rhodium-based catalyst. Two or more of such catalysts may be used in combination.

The hydrogenation of the polymer may be performed by a method described in JP4509792B2, for example. Specifically, the hydrogenation of the polymer may be performed after subjecting the polymer to a metathesis reaction in the presence of a catalyst and a co-olefin.

The catalyst in the metathesis reaction may be a known ruthenium-based catalyst. Of such catalysts, Grubbs' catalysts such as bis(tricyclohexylphosphine)benzylidene ruthenium dichloride and 1,3-bis(2,4,6-trimethylphenyl)-2-(imidazolidinylidene)(dichlorophenylmethylene)(tricyclohexylphosphine)ruth enium are preferable as the catalyst in the metathesis reaction. The co-olefin can be an olefin having a carbon number of 2 to 16 such as ethylene, isobutene, or 1-hexene. Furthermore, a known homogeneous hydrogenation catalyst such as Wilkinson's catalyst ($(PPh_3)_3RhCl$), for example, can be used as a hydrogenation catalyst in hydrogenation performed after the metathesis reaction.

<Solvent>

Water or an organic solvent can be used without any specific limitations as a solvent contained in the binder composition. The organic solvent may be N-methylpyrrolidone (hereinafter, also referred to simply as "NMP"), N,N-dimethylformamide, acetone, or the like, for example. From a viewpoint of increasing stability of the binder composition and electrode producibility, it is preferable that N-methylpyrrolidone is used as the organic solvent. Note that one solvent may be used individually, or two or more solvents may be used as a mixture in a freely selected ratio.

<Other components>

Examples of other components that can optionally be contained in the presently disclosed binder composition include dispersants, reinforcing materials, leveling agents, viscosity modifiers, and additives for electrolyte solution. These other components are not specifically limited so long as they do not affect battery reactions and may be selected from commonly known components such as those described in WO2012/115096A1, for example. One of these components may be used individually, or two or more of these components may be used in combination in a freely selected ratio.

<Various physical properties of binder composition>

[Breaking stress [MPa]/breaking strain[-]]

As previously described, a requirement of the presently disclosed binder composition is that the presently disclosed binder composition yields a film X having a breaking stress [MPa] and a breaking strain [-] according to tensile testing that satisfy a relationship formula: $0.010 \leq$ breaking stress [MPa]/breaking strain [-] $\leq 1.000$. In a situation in which the value of breaking stress [MPa]/breaking strain [-] is less than 0.010, battery characteristics (particularly cycle characteristics) of an obtained secondary battery deteriorate. Moreover, in a situation in which the value of breaking stress [MPa]/breaking strain [-] is more than 1.000, sufficient flexibility cannot be imparted to an obtained electrode, which means that cracking of the electrode cannot be sufficiently inhibited, and battery characteristics of a secondary battery also deteriorate.

From a viewpoint of even further improving flexibility of an obtained electrode and even further improving battery characteristics of an obtained secondary battery, the value of breaking stress [MPa]/breaking strain [-] of a film X formed using the presently disclosed binder composition is preferably 0.050 or more, and more preferably 0.267 or more, and is preferably 0.800 or less, and more preferably 0.769 or less.

[Breaking stress]

From a viewpoint of even further improving flexibility of an obtained electrode and even further improving battery characteristics of an obtained secondary battery, the breaking stress according to tensile testing of a film X formed using the presently disclosed binder composition is preferably 0.3 MPa or more, and more preferably 0.5 MPa or more, and is preferably 10 MPa or less.

The breaking stress of the binder composition described above can be controlled by altering the chemical composition of the polymer A, the mass ratio of the polymer A1 and the polymer A2, and the solvent, for example.

[Breaking strain]

From a viewpoint of even further improving flexibility of an obtained electrode and even further improving battery characteristics of an obtained secondary battery, the breaking strain according to tensile testing of a film X formed using the presently disclosed binder composition is preferably 6.0 or more, more preferably 8.0 or more, and even more preferably 13.5 or more, and is preferably 80 or less, more preferably 70 or less, and even more preferably 35 or less.

The breaking strain of the binder composition described above can be controlled by altering the chemical composition of the polymer A, the mass ratio of the polymer A1 and the polymer A2, and the solvent, for example.

<Production of binder composition>

In a case in which the presently disclosed binder composition contains a solvent, the presently disclosed binder composition can be produced by dissolving or dispersing the polymer A described above and the other optional components described above in the solvent. Specifically, the binder composition can be produced by mixing the above-described components and the solvent using a mixer such as a ball mill, a sand mill, a bead mill, a pigment disperser, a grinding machine, an ultrasonic disperser, a homogenizer, a planetary mixer, or a FILMIX.

Note that in a case in which the polymer A has been produced in the form of a water dispersion, the water dispersion may be used in that form as the binder composition, or the binder composition may be produced by mixing the water dispersion of the polymer A with an organic solvent and subsequently removing the water.

(Slurry composition for non-aqueous secondary battery electrode)

The presently disclosed slurry composition contains the presently disclosed binder composition set forth above and an electrode active material and may optionally further contain one or more selected from a conductive material, a solvent, and other components. Moreover, the presently disclosed slurry composition is capable of producing an electrode having excellent flexibility as a result of containing the presently disclosed binder composition set forth above. Moreover, through the presently disclosed slurry composition, it is possible to cause a secondary battery to display excellent battery characteristics.

Although the following describes, as one example, a case in which the slurry composition for a non-aqueous secondary battery electrode is a slurry composition for a lithium ion secondary battery positive electrode, the presently disclosed slurry composition for a non-aqueous secondary battery electrode is not limited to the following example.

<Binder composition>

The presently disclosed binder composition for a non-aqueous secondary battery electrode set forth above is used as the binder composition. Note that the proportional content (in terms of solid content) of the binder composition in the presently disclosed slurry composition when all solid content in the slurry composition is taken to be 100 mass% can be set as not less than 0.1 mass% and not more than 5 mass%, for example.

<Electrode active material>

The electrode active material is a material that gives and receives electrons in an electrode of a secondary battery. A substance that can occlude and release lithium is normally used as a positive electrode active material for a lithium ion secondary battery.

Specifically, known positive electrode active materials such as lithium-containing cobalt oxide ($LiCoO_2$), lithium manganate ($LiMn_2O_4$), lithium-containing nickel oxide ($LiNiO_2$), a lithium-containing complex oxide of Co-Ni-Mn ($Li(Co,Mn,Ni)O_2$), a lithium-containing complex oxide of Ni-Mn-Al, a lithium-containing complex oxide of Ni-Co-Al, olivine-type lithium iron phosphate ($LiFePO_4$), olivine-type lithium manganese phosphate ($LiMnPO_4$), a $Li_2MnO_3$-Li-$NiO_2$-based solid solution, a lithium-rich spinel compound represented by $Li_{1+x}Mn_{2-x}O_4$ ($0 < x < 2$), Li $[Ni_{0.17}Li_{0.2}Co_{0.07}Mn_{0.56}]O_2$, $LiNi_{0.5}Mn_{1.5}O_4$, and $LiNi_{0.5}Mn_{0.3}Co_{0.2}O_2$ may be used without any specific limitations as a positive electrode active material for a lithium ion secondary battery.

Note that the particle diameter of the positive electrode active material is not specifically limited and can be the same as that of a conventionally used positive electrode active material. Also note that the proportional content of the positive electrode active material in the slurry composition when all solid content in the slurry composition is taken to be 100 mass% can be not less than 90 mass% and not more than 99 mass%, for example.

<Conductive material>

The conductive material that can be contained in the presently disclosed slurry composition is a material for ensuring electrical contact among the electrode active material. Examples of conductive materials that can be used include conductive carbon materials such as carbon black (for example, acetylene black, Ketjenblack® (Ketjenblack is a registered trademark in Japan, other countries, or both), and furnace black), single-walled and multi-walled carbon nanotubes (multi-walled carbon nanotubes are inclusive of cup-stacked carbon nanotubes), carbon nanohorns, vapor-grown carbon fiber, milled carbon fiber obtained through pyrolysis and subsequent pulverization of polymer fiber, single-layer or multi-layer graphene, and carbon non-woven fabric sheet obtained through pyrolysis of non-woven fabric formed of polymer fiber; and fibers, foils, and the like of various metals. Of these conductive materials, acetylene black is preferable.

One of these conductive materials can be used individually, or two or more of these conductive materials can be used in combination. Moreover, the particle diameter of the conductive material is not specifically limited and can be the same as that of a conventionally used conductive material. Note that the proportional content of the conductive material in the slurry composition when all solid content in the slurry composition is taken to be 100 mass% can be not less than 0.1 mass% and not more than 3 mass%, for example.

<Other components>

Examples of other components that may be contained in the slurry composition include, but are not specifically limited to, the same other components as may be contained in the presently disclosed binder composition. One other component may be used individually, or two or more other components may be used in combination in a freely selected ratio. In particular, in a case in which the slurry composition is a slurry composition for a lithium ion secondary battery positive electrode. it is preferable that a binder other than the previously described polymer A (for example, a fluorine-containing polymer such as polyvinylidene fluoride (PVdF) or polytetrafluoroethylene (PTFE)) is used in addition to the polymer A. In a case in which the slurry composition contains one type or a plurality of types of binders other than the previously described polymer A, the proportion constituted by the previously described polymer A when the total content of the one type or plurality of types of binders is taken to be 100 parts by mass can be not less than 10 parts by mass and not more than 90 parts by mass. When the proportional content of the previously described polymer A in the slurry composition is not less than the lower limit set forth above, an electrode can be provided with good flexibility, and battery characteristics of an obtained secondary battery can be enhanced. Moreover, when the proportional content of the previously described polymer A is not more than the upper limit set forth above, adhesiveness of an electrode mixed material layer (positive electrode mixed material layer) can be increased.

<Production of slurry composition>

No specific limitations are placed on the method by which the slurry composition is produced. For example, the presently disclosed slurry composition can be produced by mixing the presently disclosed binder composition set forth above, the electrode active material, and the conductive material and/or other components that are used as necessary in the presence of a solvent. The solvent can be any of the same solvents as the solvent that was previously described in the "Binder composition" section. Moreover, the solvent contained in the binder composition may be used as the aforementioned solvent in that form, or a solvent may be newly added as the aforementioned solvent. The mixing method used in production of the slurry composition is not specifically limited, and a mixer such as a ball mill, a sand mill, a bead mill, a pigment disperser, a grinding machine, an ultrasonic disperser, a homogenizer, a planetary mixer, or a FILMIX can be used.

(Electrode for non-aqueous secondary battery)

The presently disclosed electrode for a non-aqueous secondary battery includes a current collector and an electrode mixed material layer formed on the current collector, wherein the electrode mixed material layer is formed using the presently disclosed slurry composition set forth above. In other words, the electrode mixed material layer is a dried product of the presently disclosed slurry composition set forth above, contains at least the polymer A and an electrode active material, and may optionally further contain one or more selected from the group consisting of a conductive material and other components. Note that components contained in the electrode mixed material layer are components that were contained in the slurry composition set forth above and that the preferred ratio of each component is also the same as the preferred ratio of that component in the slurry composition. Also note that the previously described polymer A may have a particulate form or may have any other form in the electrode mixed material layer.

The presently disclosed electrode for a non-aqueous secondary battery has excellent flexibility as a result of being formed using a slurry composition that contains the presently disclosed binder composition. Moreover, by using this electrode, it is possible to obtain a secondary battery having excellent battery characteristics.

<Production method of electrode>

The presently disclosed electrode for a non-aqueous secondary battery may be produced, for example, through a step of applying the slurry composition set forth above onto the current collector (application step) and a step of drying the slurry composition that has been applied onto the current collector to form an electrode mixed material layer on the current collector (drying step).

[Application step]

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. One of these materials may be used individually, or two or more of these materials may be used in combination in a freely selected ratio.

[Drying step]

The slurry composition on the current collector may be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector in this manner, an electrode mixed material layer can be formed on the current collector to thereby obtain an electrode for a secondary battery that includes the current collector and the electrode mixed material layer.

After the drying step, the electrode mixed material layer may be further subjected to a pressing process, such as mold pressing or roll pressing. The pressing process can improve close adherence between the electrode mixed material layer and the current collector. Furthermore, in a case in which the electrode mixed material layer contains a curable polymer, the polymer is preferably cured after the electrode mixed material layer has been formed.

(Non-aqueous secondary battery)

The presently disclosed non-aqueous secondary battery is a non-aqueous secondary battery that includes the presently disclosed electrode for a non-aqueous secondary battery. More specifically, the presently disclosed non-aqueous secondary battery is a non-aqueous secondary battery that includes a positive electrode, a negative electrode, an electrolyte solution, and a separator and in which the presently disclosed electrode for a non-aqueous secondary battery is used as at least one of the positive electrode and the negative electrode. The presently disclosed non-aqueous secondary battery has excellent battery characteristics as a result of including the presently disclosed electrode for a non-aqueous secondary battery.

Note that the presently disclosed non-aqueous secondary battery is preferably a non-aqueous secondary battery in which the presently disclosed electrode for a non-aqueous secondary battery is used as a positive electrode. Although the following describes, as one example, a case in which the secondary battery is a lithium ion secondary battery, the presently disclosed secondary battery is not limited to the following example.

<Electrodes>

Known electrodes that are used in production of non-aqueous secondary batteries can be used without any specific limitations as an electrode other than the electrode for a non-aqueous secondary battery set forth above that can be used in the presently disclosed non-aqueous secondary battery. Specifically, an electrode obtained by forming an electrode mixed material layer on a current collector by a known production method can be used as an electrode other than the electrode for a non-aqueous secondary battery set forth above.

<Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation, with $LiPF_6$ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region, and a mixture of ethylene carbonate and diethyl carbonate is more preferable.

The concentration of the electrolyte in the electrolyte solution can be adjusted as appropriate. Moreover, a known additive such as vinylene carbonate, for example, can be added to the electrolyte solution.

<Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

<Production method of non-aqueous secondary battery>

The presently disclosed non-aqueous secondary battery may be produced, for example, by stacking the positive electrode and the negative electrode with the separator in-between, performing rolling, folding, or the like of the resultant laminate as necessary in accordance with the battery shape, placing the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer. Furthermore, in the case of a polymer that is a hydrogenated polymer obtained through hydrogenation of a polymerized product including conjugated diene monomer units, the total proportional content of non-hydrogenated conjugated diene monomer units and alkylene structural units as hydrogenated conjugated diene monomer units in the hydrogenated polymer is the same as the ratio (charging ratio) of a conjugated diene monomer among all monomers used in polymerization of the polymerized product.

In the examples and comparative examples, various measurements and evaluations were performed by the following methods.

<Value of breaking stress [MPa]/breaking strain>

A binder composition produced in an example or comparative example or an 8 mass% NMP solution of a polymer produced in a synthesis example was cast into a Teflon® (Teflon is a registered trademark in Japan, other countries, or both) petri dish and was dried in a 150°C oven for 10 hours to produce a film of 500 μm in thickness. The film was punched out with a dumbbell shape in accordance with JIS K-6251, was stretched by a tensile test machine at a rate of 100 mm/min, and the breaking strain [-] and breaking stress [MPa] at this time were recorded. In addition, a value of breaking stress [MPa]/breaking strain [-] was determined.

<Iodine value>

The iodine value of a polymer produced in a synthesis example was measured in accordance with JIS K6235;2006.

<Flexibility of electrode>

Aluminum foil of 15 μm in thickness was prepared as a current collector, a slurry composition for a positive electrode produced in an example or comparative example was applied onto the aluminum foil by a comma coater such as to have an area density after drying of 30 mg/cm$^2$, and the slurry composition for a positive electrode was dried at 120°C to obtain a positive electrode web. This positive electrode web was rolled by roll pressing to produce a positive electrode formed of the aluminum foil and a positive electrode active material layer of 3.7 g/cm$^3$ in density. The produced positive electrode was subjected to a bending test in accordance with JIS K5600-5-1. Specifically, a positive electrode that had been cut out as 10 mm in width was installed in a mandrel tester and was bent with the positive electrode active material layer at the outer side. The positive electrode active material layer was observed by a microscope while in a bent state, and the presence or absence of cracking of the positive electrode was inspected. The mandrel diameter was gradually increased until cracking of the positive electrode did not occur, and the value of the mandrel diameter at which cracking of the positive electrode did not occur was recorded. A smaller mandrel diameter indicates that the positive electrode has better flexibility (windability).

A: No cracking at diameter of 5 mm
B: No cracking at diameter of 8 mm
C: No cracking at diameter of 10 mm

<IV characteristics>

A lithium ion secondary battery produced in an example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. A charge/discharge operation of charging to a cell voltage of 4.2 V and discharging to a cell voltage of 3.0 V by a 0.2C constant-current method was repeated three times, and the initial capacity was measured. Thereafter, the lithium ion secondary battery was charged to a state of charge (SOC) of 50% and was then subjected to 20 seconds of charging and 20 seconds of discharging at each of 0.5C, 1.0C, 1.5C, and 2.0C centered on the SOC of 50%. The battery voltage after 20 seconds in each case (charging side and discharging side) was plotted against the current value, and the gradient of the plot was determined as the IV resistance (Ω) (IV resistance during charging and IV resistance during discharging). The obtained IV resistance value (Ω) was evaluated by the following standard. A smaller IV resistance value indicates less internal resistance and better IV characteristics.

A: IV resistance value of less than 2.3 Ω
B: IV resistance value of not less than 2.3 Ω and less than 2.5 Ω
C: IV resistance value of 2.5 Ω or more

<Rate characteristics>

A lithium ion secondary battery produced in an example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 3.0 V by a 0.2C constant-current method at a temperature of 25°C. Thereafter, the lithium ion secondary battery was subjected to CC-CV charging (upper limit cell voltage 4.20 V) with a 0.2C constant current and CC discharging to a cell voltage of 3.00 V with a 0.2C constant current. This charging and discharging at 0.2C was repeated three times.
Next, the lithium ion secondary battery was subjected to 0.2C constant-current charging and discharging between cell voltages of 3.00 V and 4.20 V in an environment having a temperature of 25°C, and the discharge capacity at this time was defined as C0. Thereafter, the lithium ion secondary battery was CC-CV charged with a 0.2C constant current in the same manner, was CC discharged to 3.00 V with a 3.0C constant current in an environment having a temperature of 25°C, and the discharge capacity at this time was defined as C1. A ratio (percentage, capacity maintenance rate) of the discharge capacity (C1) at 3.0C relative to the discharge capacity (C0) at 0.2C, expressed by (C1/C0) × 100(%), was determined as a rate characteristic and was evaluated by the following standard. A larger value for this capacity maintenance rate indicates less reduction of discharge capacity at high current and lower internal resistance (i.e., better rate characteristics).

A: Capacity maintenance rate of 65% or more
B: Capacity maintenance rate of not less than 55% and less than 65%

C: Capacity maintenance rate of less than 55%

<Cycle characteristics>

A lithium ion secondary battery produced in an example or comparative example was subjected to 200 charge/discharge cycles in which it was charged to 4.2 V and discharged to 3.0 V by a 1.0C constant-current method in a 45°C atmosphere. A cycle capacity maintenance rate expressed by a ratio of the electric capacity at the end of 200 cycles and the initial electric capacity (= [electric capacity at end of cycling]/[initial electric capacity] $\times$ 100(%)) was determined and was evaluated by the following standard. A larger cycle capacity maintenance rate indicates better cycle characteristics.

A: Cycle capacity maintenance rate of 90% or more
B: Cycle capacity maintenance rate of not less than 80% and less than 90%
C: Cycle capacity maintenance rate of less than 80%

(Synthesis Example 1)

[Production of polymer 1]

A reactor was charged with 200 parts of deionized water and 0.2 parts of sodium carbonate, the sodium carbonate was caused to dissolve, and then 2.25 parts of fatty acid potassium soap (potassium salt of fatty acid) was added to produce a soap aqueous solution. Next, 30 parts of acrylonitrile and 0.4 parts of t-dodecyl mercaptan were added in this order to the obtained soap aqueous solution, gas inside of the reactor was purged three times with nitrogen, and then 70 parts of 1,3-butadiene was charged to the reactor. Next, the inside of the reactor was held at 10°C, and a redox polymerization initiator that was a combination of 0.1 parts of cumene hydroperoxide, 0.01 parts of ethylenediaminetetraacetic acid iron monosodium salt hydrate, 0.03 parts of sodium hydroxymethanesulfinate dihydrate, and 0.02 parts of EDTA·4Na·4H$_2$O was added to initiate a polymerization reaction. At the point at which the polymerization conversion rate reached 85%, 0.1 parts of hydroquinone (polymerization inhibitor) aqueous solution of 10% in concentration was added to stop the polymerization reaction, and then residual monomer was removed using a rotary evaporator having a water temperature of 60°C to yield a latex of nitrile rubber. Next, a portion of the obtained latex was added to an aqueous solution of magnesium sulfate as a coagulant in an amount of 1.0 mass% relative to nitrile rubber content and was stirred therewith to coagulate the latex. Thereafter, the coagulated latex was washed with water while being filtered, and the resultant coagulated material was vacuum dried at a temperature of 60°C for 12 hours to yield nitrile rubber as a polymer precursor.
The obtained nitrile rubber was dissolved in acetone such as to have a concentration of 12%, this solution was loaded into an autoclave, 500 mass ppm of a palladium/silica catalyst relative to the nitrile rubber was added, and a hydrogenation reaction was performed at a hydrogen pressure of 3.0 MPa. Once the hydrogenation reaction had ended, the solution was poured into a large amount of water to cause coagulation, and then filtration and drying were performed to yield hydrogenated nitrile butadiene rubber as a polymer 1. The iodine value of the polymer 1 and the breaking stress and breaking strain of a film formed using the polymer 1 were measured. The results are shown in Table 1.

(Synthesis Example 2)

[Production of polymer 2]

A reactor was charged with 200 parts of deionized water and 0.2 parts of sodium carbonate, the sodium carbonate was caused to dissolve, and then 2.25 parts of fatty acid potassium soap (potassium salt of fatty acid) was added to produce a soap aqueous solution. Next, 20 parts of acrylonitrile, 40 parts of ethyl acrylate, and 0.4 parts of t-dodecyl mercaptan were added in this order to the obtained soap aqueous solution, gas inside of the reactor was purged three times with nitrogen, and then 40 parts of 1,3-butadiene was charged to the reactor. Next, the inside of the reactor was held at 10°C, and a redox polymerization initiator that was a combination of 0.1 parts of cumene hydroperoxide, 0.01 parts of ethylenediaminetetraacetic acid iron monosodium salt hydrate, 0.03 parts of sodium hydroxymethanesulfinate dihydrate, and 0.02 parts of EDTA·4Na·4H$_2$O was added to initiate a polymerization reaction. At the point at which the polymerization conversion rate reached 85%, 0.1 parts of hydroquinone (polymerization inhibitor) aqueous solution of 10% in concentration was added to stop the polymerization reaction, and then residual monomer was removed using a rotary evaporator having a water temperature of 60°C to yield a latex of nitrile rubber. Next, a portion of the obtained latex was added to an aqueous solution of magnesium sulfate as a coagulant in an amount of 1.0 mass% relative to nitrile rubber content and was stirred therewith to coagulate the latex. Thereafter, the coagulated latex was washed with water while being filtered, and the resultant coagulated material was vacuum dried at a temperature of 60°C for 12 hours to yield nitrile rubber as a polymer precursor.

The obtained nitrile rubber was dissolved in acetone such as to have a concentration of 12%, this solution was loaded into an autoclave, 500 mass ppm of a palladium/silica catalyst relative to the nitrile rubber was added, and a hydrogenation reaction was performed at a hydrogen pressure of 3.0 MPa. Once the hydrogenation reaction had ended, the solution was poured into a large amount of water to cause coagulation, and then filtration and drying were performed to yield hydrogenated nitrile butadiene rubber as a polymer 2. The iodine value of the polymer 2 and the breaking stress and breaking strain of a film formed using the polymer 2 were measured. The results are shown in Table 1.

(Synthesis Example 3)

[Production of polymer 3]

A reactor was charged with 200 parts of deionized water and 0.2 parts of sodium carbonate, the sodium carbonate was caused to dissolve, and then 2.25 parts of fatty acid potassium soap (potassium salt of fatty acid) was added to produce a soap aqueous solution. Next, 18 parts of acrylonitrile and 0.3 parts of t-dodecyl mercaptan were added in this order to the obtained soap aqueous solution, gas inside of the reactor was purged three times with nitrogen, and then 42 parts of 1,3-butadiene was charged to the reactor. Next, the inside of the reactor was held at 10°C, and a redox polymerization initiator that was a combination of 0.1 parts of cumene hydroperoxide, 0.01 parts of ethylenediaminetetraacetic acid iron monosodium salt hydrate, 0.03 parts of sodium hydroxymethanesulfinate dihydrate, and 0.02 parts of EDTA·4Na·4H$_2$O was added to initiate a polymerization reaction. At the point at which the polymerization conversion rate reached 60%, 12 parts of acrylonitrile and 28 parts of 1,3-butadiene were supplemented into the reactor, and the polymerization reaction was further performed. At the point at which the polymerization conversion rate reached 90%, 0.1 parts of hydroquinone (polymerization inhibitor) aqueous solution of 10% in concentration was added to stop the polymerization reaction, and then residual monomer was removed using a rotary evaporator having a water temperature of 60°C to yield a latex of nitrile rubber. Next, a portion of the obtained latex was added to an aqueous solution of magnesium sulfate as a coagulant in an amount of 1.0 mass% relative to nitrile rubber content and was stirred therewith to coagulate the latex. Thereafter, the coagulated latex was washed with water while being filtered, and the resultant coagulated material was vacuum dried at a temperature of 60°C for 12 hours to yield nitrile rubber as a polymer precursor.

The obtained nitrile rubber was dissolved in acetone such as to have a concentration of 12%, this solution was loaded into an autoclave, 500 mass ppm of a palladium/silica catalyst relative to the nitrile rubber was added, and a hydrogenation reaction was performed at a hydrogen pressure of 3.0 MPa. Once the hydrogenation reaction had ended, the solution was poured into a large amount of water to cause coagulation, and then filtration and drying were performed to yield hydrogenated nitrile butadiene rubber as a polymer 3. The iodine value of the polymer 3 and the breaking stress and breaking strain of a film formed using the polymer 3 were measured. The results are shown in Table 1.

(Synthesis Example 4)

[Production of polymer 4]

A reactor was charged with 200 parts of deionized water and 0.2 parts of sodium carbonate, the sodium carbonate was caused to dissolve, and then 2.25 parts of fatty acid potassium soap (potassium salt of fatty acid) was added to produce a soap aqueous solution. Next, 30 parts of acrylonitrile and 1.0 parts of t-dodecyl mercaptan were added in this order to the obtained soap aqueous solution, gas inside of the reactor was purged three times with nitrogen, and then 70 parts of 1,3-butadiene was charged to the reactor. Next, the inside of the reactor was held at 10°C, and a redox polymerization initiator that was a combination of 0.1 parts of cumene hydroperoxide, 0.01 parts of ethylenediaminetetraacetic acid iron monosodium salt hydrate, 0.03 parts of sodium hydroxymethanesulfinate dihydrate, and 0.02 parts of EDTA·4Na·4H$_2$O was added to initiate a polymerization reaction. At the point at which the polymerization conversion rate reached 80%, 0.1 parts of hydroquinone (polymerization inhibitor) aqueous solution of 10% in concentration was added to stop the polymerization reaction, and then residual monomer was removed using a rotary evaporator having a water temperature of 60°C to yield a latex of nitrile rubber. Next, a portion of the obtained latex was added to an aqueous solution of magnesium sulfate as a coagulant in an amount of 1.0 mass% relative to nitrile rubber content and was stirred therewith to coagulate the latex. Thereafter, the coagulated latex was washed with water while being filtered, and the resultant coagulated material was vacuum dried at a temperature of 60°C for 12 hours to yield nitrile rubber as a polymer precursor.

The obtained nitrile rubber was dissolved in acetone such as to have a concentration of 12%, this solution was loaded into an autoclave, 500 mass ppm of a palladium/silica catalyst relative to the nitrile rubber was added, and a hydrogenation reaction was performed at a hydrogen pressure of 3.0 MPa. Once the hydrogenation reaction had ended, the solution was poured into a large amount of water to cause coagulation, and then filtration and drying were performed to yield hydrogenated nitrile butadiene rubber as a polymer 4. The iodine value of the polymer 4 and the breaking stress and breaking strain of a film formed using the polymer 4 were measured. The results are shown in Table 1.

(Synthesis Example 5)

[Production of polymer 5]

A reactor was charged with 200 parts of deionized water and 0.2 parts of sodium carbonate, the sodium carbonate was caused to dissolve, and then 2.25 parts of fatty acid potassium soap (potassium salt of fatty acid) was added to produce a soap aqueous solution. Next, 50 parts of acrylonitrile and 1.0 parts of t-dodecyl mercaptan were added in this order to the obtained soap aqueous solution, gas inside of the reactor was purged three times with nitrogen, and then 20 parts of 1,3-butadiene was charged to the reactor. Next, the inside of the reactor was held at 10°C, and a redox polymerization initiator that was a combination of 0.1 parts of cumene hydroperoxide, 0.01 parts of ethylenediaminetetraacetic acid iron monosodium salt hydrate, 0.03 parts of sodium hydroxymethanesulfinate dihydrate, and 0.02 parts of EDTA·4Na·4H$_2$O was added to initiate a polymerization reaction. At the point at which the polymerization conversion rate reached 50%, 30 parts of acrylonitrile was supplemented into the reactor, and the polymerization reaction was further performed. At the point at which the polymerization conversion rate reached 70%, 0.1 parts of hydroquinone (polymerization inhibitor) aqueous solution of 10% in concentration was added to stop the polymerization reaction, and then residual monomer was removed using a rotary evaporator having a water temperature of 60°C to yield a latex of nitrile rubber. Next, a portion of the obtained latex was added to an aqueous solution of magnesium sulfate as a coagulant in an amount of 1.0 mass% relative to nitrile rubber content and was stirred therewith to coagulate the latex. Thereafter, the coagulated latex was washed with water while being filtered, and the resultant coagulated material was vacuum dried at a temperature of 60°C for 12 hours to yield nitrile rubber as a polymer precursor.

The obtained nitrile rubber was dissolved in acetone such as to have a concentration of 12%, this solution was loaded into an autoclave, 1,000 mass ppm of a palladium/silica catalyst relative to the nitrile rubber was added, and a hydrogenation reaction was performed at a hydrogen pressure of 3.0 MPa. Once the hydrogenation reaction had ended, the solution was poured into a large amount of water to cause coagulation, and then filtration and drying were performed to yield hydrogenated nitrile butadiene rubber as a polymer 5. The iodine value of the polymer 5 and the breaking stress and breaking strain of a film formed using the polymer 5 were measured. The results are shown in Table 1.

(Synthesis Example 6)

[Production of polymer 6]

A reactor was charged with 200 parts of deionized water and 0.2 parts of sodium carbonate, the sodium carbonate was caused to dissolve, and then 2.25 parts of fatty acid potassium soap (potassium salt of fatty acid) was added to produce a soap aqueous solution. Next, 17 parts of acrylonitrile, 50 parts of ethyl acrylate, and 0.4 parts of t-dodecyl mercaptan were added in this order to the obtained soap aqueous solution, gas inside of the reactor was purged three times with nitrogen, and then 33 parts of 1,3-butadiene was charged to the reactor. Next, the inside of the reactor was held at 10°C, and a redox polymerization initiator that was a combination of 0.1 parts of cumene hydroperoxide, 0.01 parts of ethylenediaminetetraacetic acid iron monosodium salt hydrate, 0.03 parts of sodium hydroxymethanesulfinate dihydrate, and 0.02 parts of EDTA·4Na·4H$_2$O was added to initiate a polymerization reaction. At the point at which the polymerization conversion rate reached 85%, 0.1 parts of hydroquinone (polymerization inhibitor) aqueous solution of 10% in concentration was added to stop the polymerization reaction, and then residual monomer was removed using a rotary evaporator having a water temperature of 60°C to yield a latex of nitrile rubber. Next, a portion of the obtained latex was added to an aqueous solution of magnesium sulfate as a coagulant in an amount of 1.0 mass% relative to nitrile rubber content and was stirred therewith to coagulate the latex. Thereafter, the coagulated latex was washed with water while being filtered, and the resultant coagulated material was vacuum dried at a temperature of 60°C for 12 hours to yield nitrile rubber as a polymer precursor.

The obtained nitrile rubber was dissolved in acetone such as to have a concentration of 12%, this solution was loaded into an autoclave, 1,500 mass ppm of a palladium/silica catalyst relative to the nitrile rubber was added, and a hydrogenation reaction was performed at a hydrogen pressure of 3.0 MPa. Once the hydrogenation reaction had ended, the solution was poured into a large amount of water to cause coagulation, and then filtration and drying were performed to yield hydrogenated nitrile butadiene rubber as a polymer 6. The iodine value of the polymer 6 and the breaking stress and breaking strain of a film formed using the polymer 6 were measured. The results are shown in Table 1.

(Example 1)

[Production of binder composition]

A binder composition (solid content concentration: 8 mass%) was produced by using a disper blade to stir the polymer 1 (0.25 parts) produced in Synthesis Example 1 and the polymer 2 (0.25 parts) produced in Synthesis Example 2 as a polymer A in the presence of NMP. This binder composition was used to form a film and was subjected to tensile testing to measure the breaking strain and breaking stress. In addition, a value of breaking stress [MPa]/breaking strain was determined. The results are shown in Table 2.

[Production of slurry composition]

With respect to 96.8 parts of NMC532 ($LiNi_{0.5}Mn_{0.3}Co_{0.2}O_2$) having a layered structure as a positive electrode active material, 0.5 parts of PVdF and 0.5 parts (in terms of solid content) of the above-described binder composition were added. Next, a carbon paste in which 2.0 parts of acetylene black (Li435 produced by Denka Company Limited) as a conductive material and 0.2 parts of hydrogenated nitrile butadiene rubber (H-NBR) as a dispersant had been mixed together and also an appropriate amount of NMP were added thereto, and the resultant mixture was stirred in a planetary mixer to produce a slurry composition (slurry composition for a positive electrode).

[Production of positive electrode]

Aluminum foil of 15 μm in thickness was prepared as a current collector. The slurry composition was applied onto both sides of the aluminum foil by a comma coater such as to have a coating weight after drying of 23 mg/cm² at each side and was dried at 120°C. This positive electrode was rolled by roll pressing to produce a positive electrode formed of the aluminum foil and positive electrode active material layers of 3.7 g/cm³ in density.

[Production of negative electrode]

A planetary mixer equipped with a disper blade was charged with 100 parts of artificial graphite having a specific surface area of 4 m²/g as a negative electrode active material and 1 part in terms of solid content of a 1% aqueous solution of carboxymethyl cellulose (BSH-12 produced by DKS Co., Ltd.) as a dispersant, the solid content concentration was adjusted to 55% with deionized water, and 60 minutes of mixing was performed at 25°C. Next, the solid content concentration was adjusted to 52% with deionized water. Thereafter, a further 15 minutes of mixing was performed to obtain a mixture. Deionized water and 1.0 parts in terms of solid content of a 40% aqueous solution containing a styrene-butadiene copolymer were added to the mixture, the final solid content concentration was adjusted to 50%, and a further 10 minutes of mixing was performed. This mixture was subjected to defoaming to yield a slurry composition for a negative electrode having good fluidity. The slurry composition for a negative electrode was applied onto both sides of a copper foil current collector of 20 μm in thickness by a comma coater such as to have an area density after drying of 13 mg/cm² and was dried at 60°C. Thereafter, 2 minutes of heat treatment was performed at 120°C to obtain a negative electrode web. This negative electrode web was rolled by roll pressing to obtain a negative electrode including negative electrode active material layers of 80 μm in thickness.

[Separator]

A separator made of a single layer of polypropylene (thickness: 25 μm; porosity: 55%) was used.

[Production of lithium ion secondary battery]

An aluminum packing case was prepared as a battery case. The obtained positive electrode was cut to a sheet shape of 25.0 mm in width and 60 cm in length, and the obtained negative electrode was cut to a sheet shape of 35.0 mm in width and 70 cm in length. The positive electrode for a lithium ion secondary battery and the negative electrode for a lithium ion secondary battery that had been produced were wound up using a core of 20 mm in diameter with the respective electrode mixed material layers thereof facing each other and with the separator interposed therebetween to obtain a roll. The obtained roll was pressed into a flattened form at a rate of 10 mm/s, was subsequently enclosed in the aluminum packing case serving as a battery case, and a $LiPF_6$ solution of 1.0 M in concentration (solvent: mixed solvent of ethylene carbonate (EC)/diethyl carbonate (DEC) = 3/7 (volume ratio); additive: containing 2 volume% (solvent ratio) of vinylene carbonate) was injected as an electrolyte solution such that no air remained. An opening of the aluminum packing case was closed by heat sealing at a temperature of 150°C to produce a wound lithium ion secondary battery having a capacity of 620 mAh. IV characteristics, rate characteristics, and cycle characteristics were evaluated. The results are shown in Table 2.

(Example 2)

A binder composition, a slurry composition, a positive electrode, a negative electrode, and a lithium ion secondary battery were produced in the same way as in Example 1 with the exception that in production of the binder composition of Example 1, the polymer 2 (0.1 parts) and the polymer 3 (0.4 parts) produced in Synthesis Example 3 were used instead of the polymer 1 (0.25 parts) and the polymer 2 (0.25 parts). Moreover, various operations and measurements were performed in the same way as in Example 1. The results are shown in Tables 1 and 2.

(Example 3)

A binder composition, a slurry composition, a positive electrode, a negative electrode, and a lithium ion secondary battery were produced in the same way as in Example 1 with the exception that in production of the binder composition of Example 1, the amount of the polymer 1 was changed from 0.25 parts to 0.05 parts, and the amount of the polymer 2 was changed from 0.25 parts to 0.45 parts. Moreover, various operations and measurements were performed in the same way as in Example 1. The results are shown in Tables 1 and 2.

(Example 4)

A binder composition, a slurry composition, a positive electrode, a negative electrode, and a lithium ion secondary battery were produced in the same way as in Example 1 with the exception that in production of the binder composition of Example 1, only the polymer 3 (0.5 parts) produced in Synthesis Example 3 was used instead of the polymer 1 (0.25 parts) and the polymer 2 (0.25 parts). Moreover, various operations and measurements were performed in the same way as in Example 1. The results are shown in Tables 1 and 2.

(Example 5)

A binder composition, a slurry composition, a positive electrode, a negative electrode, and a lithium ion secondary battery were produced in the same way as in Example 1 with the exception that in production of the binder composition of Example 1, only the polymer 4 (0.5 parts) produced in Synthesis Example 4 was used instead of the polymer 1 (0.25 parts) and the polymer 2 (0.25 parts). Moreover, various operations and measurements were performed in the same way as in Example 1. The results are shown in Tables 1 and 2.

(Example 6)

A binder composition, a slurry composition, a positive electrode, a negative electrode, and a lithium ion secondary battery were produced in the same way as in Example 1 with the exception that in production of the slurry composition of Example 1, the amounts of the polymer 1 and the polymer 2 were changed from 0.25 parts to 0.50 parts, and PVdF was not compounded as a binder. Moreover, various operations and measurements were performed in the same way as in Example 1. The results are shown in Tables 1 and 2.

(Comparative Example 1)

A binder composition, a slurry composition, a positive electrode, a negative electrode, and a lithium ion secondary battery were produced in the same way as in Example 1 with the exception that in production of the binder composition of Example 1, only the polymer 5 (0.5 parts) produced in Synthesis Example 5 was used instead of the polymer 1 (0.25 parts) and the polymer 2 (0.25 parts). Moreover, various operations and measurements were performed in the same way as in Example 1. The results are shown in Tables 1 and 2.

(Comparative Example 2)

A binder composition, a slurry composition, a positive electrode, a negative electrode, and a lithium ion secondary battery were produced in the same way as in Example 1 with the exception that in production of the binder composition of Example 1, only the polymer 6 (0.5 parts) produced in Synthesis Example 6 was used instead of the polymer 1 (0.25 parts) and the polymer 2 (0.25 parts). Moreover, various operations and measurements were performed in the same way as in Example 1. The results are shown in Tables 1 and 2.

[Table 1]

| | | | Synthesis Example 1 | Synthesis Example 2 | Synthesis Example 3 | Synthesis Example 4 | Synthesis Example 5 | Synthesis Example 6 |
|---|---|---|---|---|---|---|---|---|
| | | | Polymer 1 | Polymer 2 | Polymer 3 | Polymer 4 | Polymer 5 | Polymer 6 |
| Chemical composition | Nitrile group-containing monomer | Type | AN | AN | AN | AN | AN | AN |
| | | Amount (parts) | 30 | 20 | 30 | 30 | 80 | 17 |
| | Conjugated diene monomer | Type | BD | BD | BD | BD | BD | BD |
| | | Amount (parts) | 70 | 40 | 70 | 70 | 20 | 33 |
| | (Meth)acrylic acid ester monomer | Type | - | EA | - | - | - | EA |
| | | Amount (parts) | - | 40 | - | - | - | 50 |
| Iodine value (mg/100 mg) | | | 15 | 11 | 15 | 10 | 11 | 11 |
| Breaking stress (MPa) | | | 0.8 | 0.7144 | 1.63 | 0.7 | 2.8 | 0.35 |
| Breaking strain (-) | | | 10.3 | 59.52 | 12.43 | 8.1 | 2.5 | 57.5 |

In Table 1:

"AN" indicates acrylonitrile;
"BD" indicates 1,3-butadiene; and
"EA" indicates ethyl acrylate.

[Table 2] Example Example Example Example Example Example Comparative Comparative 1 2 3 4 5 6 Example 1 Example 2 First polymer Polymer Polymer Polymer Polymer Polymer Polymer Polymer Polymer 1 3 1 3 4 1 5 6 Second polymer Polymer Polymer Polymer - - Polymer - - Binder 2 2 2 2 composition Mass ratio of polymers 5:5 8:2 1:9 10:0 10:0 5:5 10:0 10:0 (first polymer:second polymer) Breaking stress [MPa]/ breaking strain [-] 0.267 0.769 0.014 0.13 0.088 0.267 1.120 0.006 Breaking strain (-) 13.5 2.2 35.0 12.43 8.1 13.5 2.5 57.5 Fluorine- Type PVdF PVdF PVdF PVdF PVdF - PVdF PVdF composition containing Amount 0.5 0.5 0.5 0.5 0.5 - 0.5 0.5 polymer (parts) Electrode flexibility A B A B B A C B Evaluations IV resistance A A B B B B C B Rate characteristics A A B B A B B C Cycle characteristics A A B B B A C B

In Table 2:

"PVdF" indicates polyvinylidene fluoride.

It can be seen from the results in Table 2 that flexibility of an obtained electrode is excellent and that battery characteristics of a secondary battery are excellent in Examples 1 to 6 in which the used binder composition for a non-aqueous secondary battery electrode yields a film having a breaking stress [MPa] and a breaking strain [-] according to tensile testing that satisfy a relationship formula: $0.010 \leq$ breaking stress [MPa]/breaking strain [-] $\leq 1.000$.

INDUSTRIAL APPLICABILITY

According to the present disclosure, it is possible to provide a binder composition for a non-aqueous secondary battery electrode that can suitably be used to produce an electrode having excellent flexibility and that can enhance battery characteristics of a secondary battery including the obtained electrode.

Moreover, according to the present disclosure, it is possible to provide a slurry composition for a non-aqueous secondary battery electrode that is capable of forming an electrode having excellent flexibility and that can enhance battery characteristics of a secondary battery including the obtained electrode.

Furthermore, according to the present disclosure, it is possible to provide an electrode for a non-aqueous secondary battery that can improve battery characteristics of a non-aqueous secondary battery and a non-aqueous secondary battery that has excellent battery characteristics.

**Claims**

1.  A binder composition for a non-aqueous secondary battery electrode comprising a polymer A, wherein the binder composition for a non-aqueous secondary battery electrode yields a film X having a breaking stress [MPa] and a breaking strain [-] according to tensile testing that satisfy a relationship formula shown below:

$$0.010 \leq \text{breaking stress [MPa]/breaking strain [-]} \leq 1.000.$$

2.  The binder composition for a non-aqueous secondary battery electrode according to claim 1, wherein the breaking strain of the film X according to tensile testing is 6.0 or more.

3.  The binder composition for a non-aqueous secondary battery electrode according to claim 1 or 2, wherein the polymer A includes two or more types of polymers.

4.  The binder composition for a non-aqueous secondary battery electrode according to any one of claims 1 to 3, wherein the polymer A includes a polymer A1 that yields a film Y having a breaking stress of 0.3 MPa or more and a breaking strain of not less than 6.0 and less than 25.0 according to tensile testing.

5.  The binder composition for a non-aqueous secondary battery electrode according to claim 4, wherein the polymer A further includes a polymer A2 that yields a film Y having a breaking stress of 0.3 MPa or more and a breaking strain of 25.0 or more according to tensile testing.

6.  The binder composition for a non-aqueous secondary battery electrode according to claim 5, wherein a mass ratio of the polymer A1 and the polymer A2, expressed as polymer A1:polymer A2, is not less than 9:1 and not more than 1:9.

7.  The binder composition for a non-aqueous secondary battery electrode according to any one of claims 4 to 6, wherein the polymer A1 includes a nitrile group-containing monomer unit and an alkylene structural unit.

8.  The binder composition for a non-aqueous secondary battery electrode according to any one of claims 5 to 7, wherein the polymer A2 includes a (meth)acrylic acid ester monomer unit.

9.  A slurry composition for a non-aqueous secondary battery electrode comprising: an electrode active material; and the binder composition for a non-aqueous secondary battery electrode according to any one of claims 1 to 8.

10. An electrode for a non-aqueous secondary battery comprising an electrode mixed material layer formed using the slurry composition for a non-aqueous secondary battery electrode according to claim 9.

11. A non-aqueous secondary battery comprising the electrode for a non-aqueous secondary battery according to claim 10.

## INTERNATIONAL SEARCH REPORT

International application No.

**PCT/JP2024/011987**

**A. CLASSIFICATION OF SUBJECT MATTER**

*H01M 4/62*(2006.01)i; *H01M 4/13*(2010.01)i; *H01M 4/139*(2010.01)i
FI: H01M4/62 Z; H01M4/13; H01M4/139

According to International Patent Classification (IPC) or to both national classification and IPC

**B. FIELDS SEARCHED**

Minimum documentation searched (classification system followed by classification symbols)

H01M4/62; H01M4/13; H01M4/139

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | KR 10-2015-0029090 A (LG CHEM, LTD.) 18 March 2015 (2015-03-18) claims 13-14, example 3, table 1 | 1-3, 9-11 |
| A | claims 13-14, example 3, table 1 | 4-8 |
| X | JP 9-92288 A (SUMITOMO BAKELITE CO., LTD.) 04 April 1997 (1997-04-04) paragraph [0015], example 1 | 1-2, 9-11 |
| A | paragraph [0015], example 1 | 3-8 |
| X | WO 2010/150513 A1 (CANON KABUSHIKI KAISHA) 29 December 2010 (2010-12-29) tables 1-2 | 1-2, 9-11 |
| A | tables 1-2 | 3-8 |
| X | CN 105161720 A (ANHUI UNIVERSITY) 16 December 2015 (2015-12-16) example 3 | 1-2, 9-11 |
| A | example 3 | 3-8 |

☑ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **10 June 2024** | **18 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| | International application No. |
|---|---|
| | **PCT/JP2024/011987** |

### C. DOCUMENTS CONSIDERED TO BE RELEVANT

| Category* | Citation of document, with indication, where appropriate, of the relevant passages | Relevant to claim No. |
|---|---|---|
| A | JP 6870769 B1 (ZEON CORPORATION) 12 May 2021 (2021-05-12)<br>example 1 | 1-11 |
| A | JP 2021-168948 A (SHISEIDO COMPANY, LTD.) 28 October 2021 (2021-10-28)<br>paragraphs [0142]-[0143] | 1-11 |

Form PCT/ISA/210 (second sheet) (July 2022)

## INTERNATIONAL SEARCH REPORT
### Information on patent family members

International application No.

**PCT/JP2024/011987**

| Patent document cited in search report | | | Publication date (day/month/year) | Patent family member(s) | | | Publication date (day/month/year) |
|---|---|---|---|---|---|---|---|
| KR | 10-2015-0029090 | A | 18 March 2015 | (Family: none) | | | |
| JP | 9-92288 | A | 04 April 1997 | (Family: none) | | | |
| WO | 2010/150513 | A1 | 29 December 2010 | US<br>tables 1-2<br>TW | 2011/0052985<br><br>201110448 | A1<br><br>A | |
| CN | 105161720 | A | 16 December 2015 | (Family: none) | | | |
| JP | 6870769 | B1 | 12 May 2021 | US<br>WO<br>EP<br>KR<br>CN | 2023/0299298<br>2022/045267<br>4207364<br>10-2022-0132665<br>116114080 | A1<br>A1<br>A1<br>A<br>A | |
| JP | 2021-168948 | A | 28 October 2021 | US<br>paragraphs [0142]-[0143]<br>WO<br>EP<br>CA<br>AU<br>KR<br>MX<br>BR<br>IL<br>CN | 2020/0009184<br><br>2017/083398<br>3373906<br>3002455<br>2016354456<br>10-2018-0100312<br>2018004753<br>112018009447<br>259123<br>113662885 | A1<br><br>A1<br>A1<br>A1<br>A<br>A<br>A<br>A<br>A<br>A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017143075 A
- JP 4509792 B
- WO 2012115096 A1
- JP 2012204303 A